# EUROPEAN PATENT SPECIFICATION

(11) **EP 1 918 741 B1**
(45) Date of publication and mention of the grant of the patent: **28.04.2010**
(21) Application number: 07021171.9
(22) Date of filing: 30.10.2007
(51) Int. Cl.: G02B 5/30, H01B 1/12, H01L 51/00

(54) **Polarizer and liquid crystal display including the same**
Polarisator und Flüssigkristallanzeige damit
Polariseur et affichage à cristaux liquides l'incorporant

(30) Priority: 31.10.2006 KR 20060106249
(43) Date of publication of application: 07.05.2008
(73) Proprietor: Samsung Electronics Co., Ltd., Yeongtong-gu Suwon-city, Gyeonggi-do 442-742 (KR)
(72) Inventor: Bae, Woo-Jin, Seoul (KR)
(74) Representative: Dr. Weitzel & Partner

(56) References cited:
- US-A1- 2004 209 007
- US-A1- 2006 176 423
- BAE,KIM, HO JO: "A water-soluble and self-doped conducting polypyrrole graft copolymer" MACROMOLECULES, vol. 38, 21 January 2005 (2005-01-21), pages 1044-1047, XP002468518
- BAE, KIM, PARK, HO JO: "A novel water-soluble and self-doped conducting polyaniline graft copolymer" CHEMICAL COMMUNICATIONS, 2003, pages 2768-2769, XP002468519

## Description

### CROSS-REFERENCE TO RELATED APPLICATION

### BACKGROUND OF THE INVENTION

### Field of the Invention

The present invention relates to a polarizer and a liquid crystal display including the same.

### Description of the Related Art

A liquid crystal display (LCD) is one of the most widely used flat panel displays. An LCD includes two panels provided with field-generating electrodes, such as pixel electrodes and a common electrode, and a liquid crystal (LC) layer interposed therebetween. The LCD displays images by applying voltages to the field-generating electrodes to generate an electric field in the LC layer, which determines the orientations of the LC molecules in the LC layer that varies the polarization of incident light.

In the LCD, the electric fields are generated between the pixel electrode and the common electrode, such that the electric fields determine the orientations of liquid crystal molecules in the liquid crystal layer Accordingly, the changes of the orientations of the liquid crystal molecules change the transmittance of the LCD so that the LCD can display an image according to the change of the transmittance . The electric fields applied between the pixel electrode and the common electrode are determined by the voltage of the pixel electrode which is controlled by a thin film transistor employed as a switching element. The thin film transistor transmits or blocks the voltage transmitted to a data line according to the scanning signal transmitted to a gate line.

A polarizer is attached to the outside surface of the LCD. The polarizer includes a release film and a protective film that are attached to the front and back sides of the polarizer. The release film is removed from the polarizer before directly attaching the polarizer to the LCD panel. The protective film is removed after the completion of the LCD.

However, static electricity is generated by charge separation when the release film or the protective films are removed from the polarizer. This static electricity may be penetrate into the LCD panel thereby damaging it.

### SUMMARY OF THE INVENTION

A liquid crystal display is provided that includes: first and second substrates; a liquid crystal layer formed between the first and second substrates; a polarizer provided on at least one of the first and second substrates; and an adhesive adhering the polarizer to the one of the first and second substrates, wherein the adhesive includes a water soluble conductive polymer.

The water soluble conductive polymer may include a self-doped water soluble polyaniline graft copolymer.

The self-doped water soluble polyaniline graft copolymer may be represented by Chemical Formula (I):

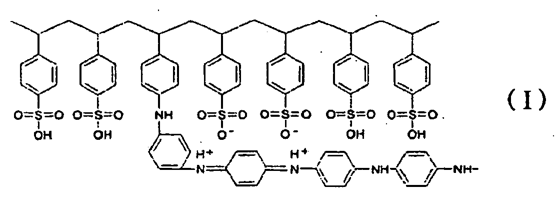

The water soluble conductive polymer may include a self-doped water soluble polypyrrole graft copolymer.

The self-doped water soluble polypyrrole graft copolymer may be represented by Chemical Formula (II):

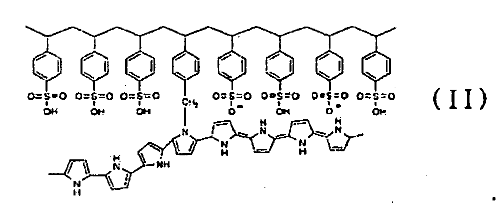

The content of the water soluble conductive polymer may be in the range of about 5 to 50 weight percentage in the total content of the adhesive.

The liquid crystal display may further include a gate line and a data line formed on the first substrate and crossing each other, a thin film transistor connected to the gate line and the data line, and a pixel electrode connected to the thin film transistor.

The liquid crystal display may further include a slope member for determining the slope direction of the liquid crystal molecules of the liquid crystal layer.

### BRIEF DESCRIPTION OF THE DRAWINGS

The present invention will become more apparent by describing embodiments thereof in detail with reference to the accompanying drawings, in which:

Fig. 1 is a schematic view of an LCD according to an embodiment of the present invention;

Fig. 2 is a layout view of a TFT array panel of an LCD according to an embodiment of the present invention;

Fig. 3 is a layout view of a common electrode panel of an LCD according to an embodiment of the present invention;

Fig. 4 is a layout view of an LCD including the TFT array panel shown in Fig. 2 and the common electrode panel shown in Fig. 3;

Fig. 5 is a sectional view of the LCD shown in Fig. 4 taken along the line V-V;

Fig. 6 is a sectional view of the LCD shown in Fig. 4 taken along the line VI-VI;

Figs. 7A and 7B are sectional views of a polarizer according to an embodiment of the present invention; and

Fig. 8 is a sectional view of an LCD including the polarizer according to an embodiment of the present invention.

### DETAILED DESCRIPTION OF EMBODIMENTS

The present invention will now be described more fully hereinafter with reference to the accompanying drawings.

In the drawings, the thickness of layers, films, and regions are exaggerated for clarity. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Liquid crystal displays according to embodiments of the present invention will be described with reference to the accompanying drawings.

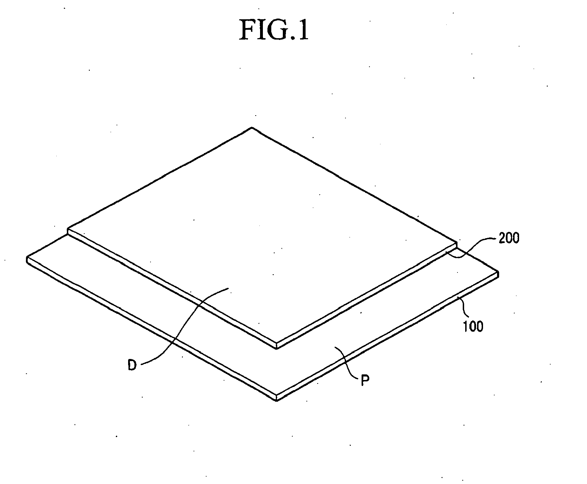

An LCD including a polarizer according to an embodiment of the present invention will be described in detail with reference to Figs. 1 to 6.

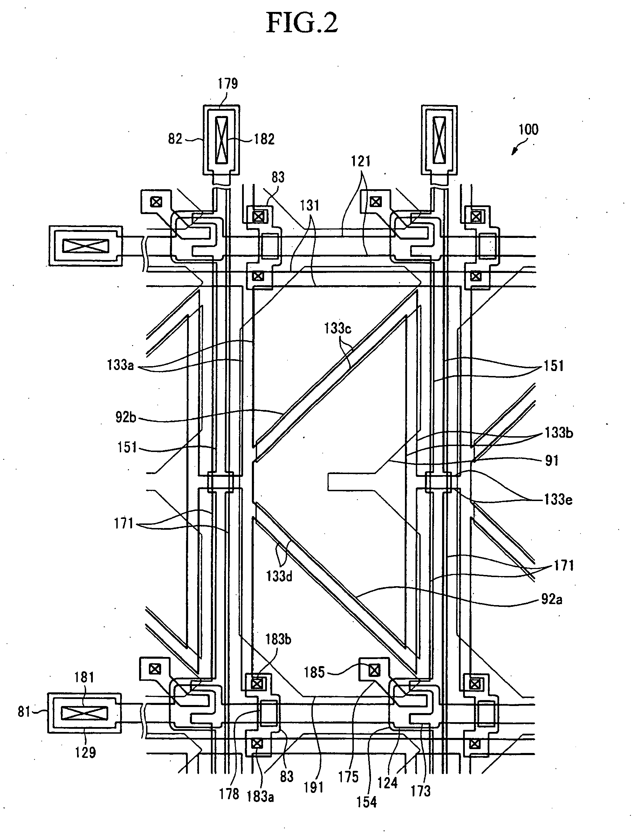

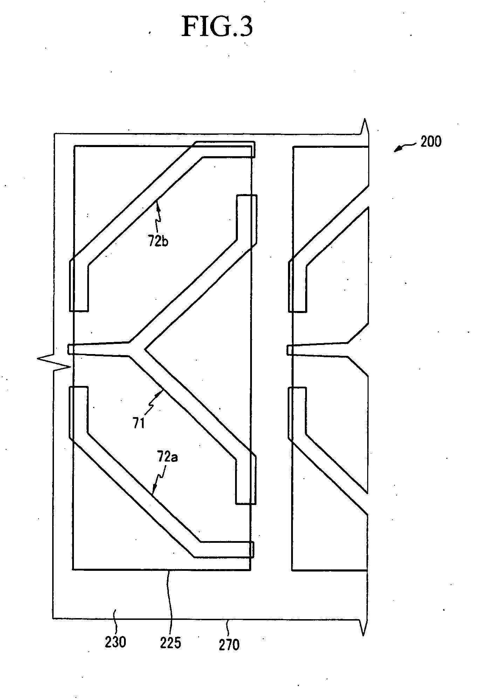

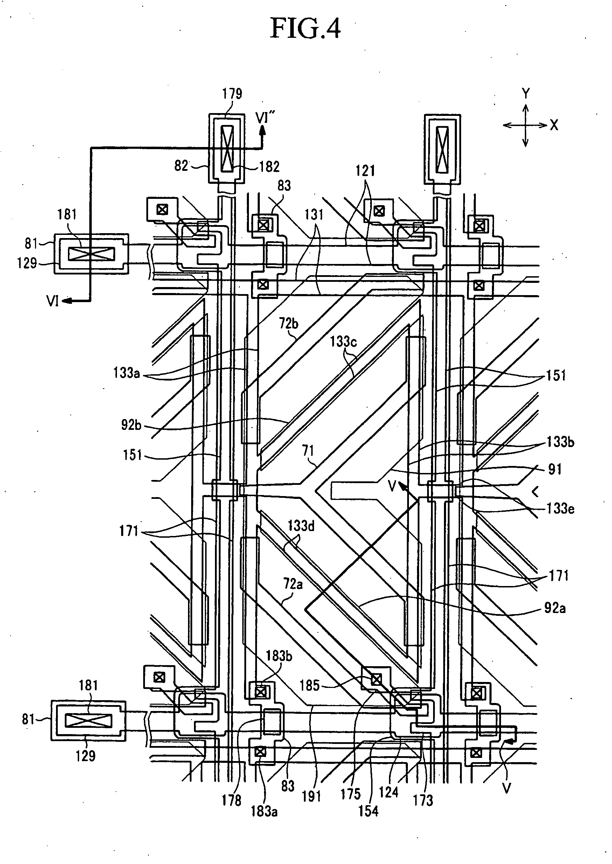

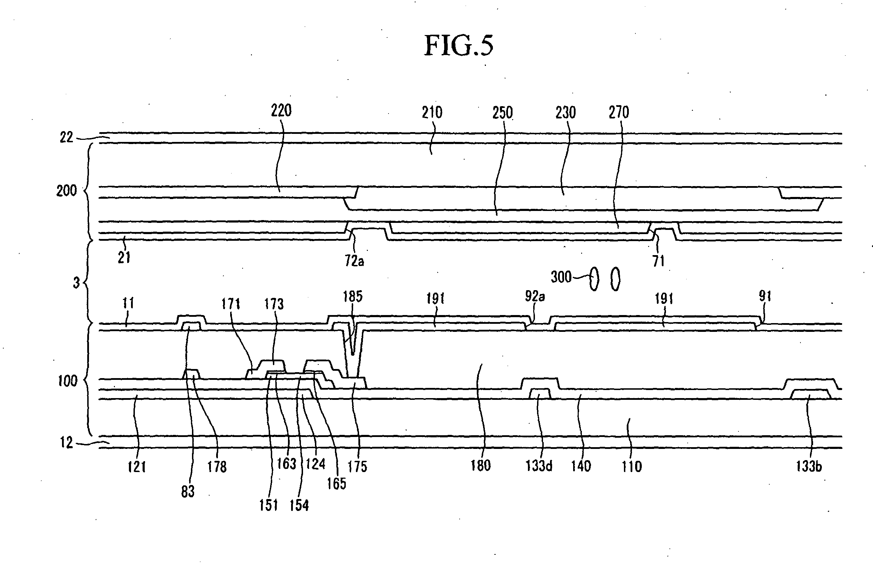

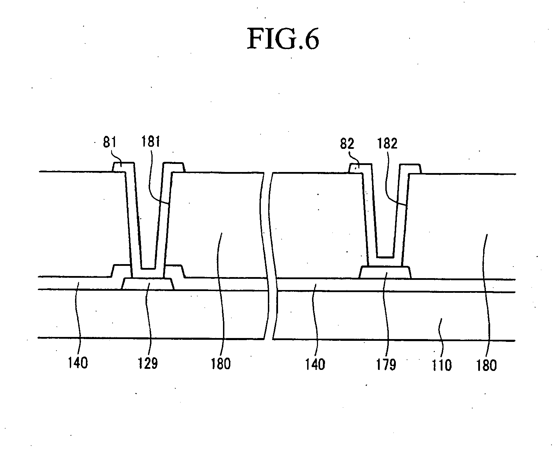

Fig. 1 is a schematic view of an LCD according to an embodiment of the present invention, Fig. 2 is a layout view of a TFT array panel of an LCD according to an embodiment of the present invention, Fig. 3 is a layout view of a common electrode panel of an LCD according to an embodiment of the present invention, Fig. 4 is a layout view of an LCD including the TFT array panel shown in Fig. 2 and the common electrode panel shown in Fig. 3, Fig. 5 is a sectional view of the LCD shown in Fig. 4 taken along the line V-V, and Fig. 6 is a sectional view of the LCD shown in Fig. 4 taken along the line VI-VI.

An LCD according to an embodiment of the present invention includes a TFT array panel 100, a common electrode panel 200, and an LC layer (3) interposed between the panels 100 and 200 . The LCD includes a display region D for displaying images and a pad region P for connecting to an external circuit.

The TFT array panel 100 is now described in detail with reference to Figs. 2, 4, 5, and 6.

A plurality of gate lines 121 and a plurality of storage electrode lines 131 are formed on an insulating substrate 110 such as transparent glass.

The gate lines 121 extend substantially in a transverse direction and are separated from each other and transmit gate signals. Each gate line 121 includes a plurality of projections forming a plurality of gate electrodes 124 and an end portion 129 having a large area for contact with another layer or an external driving circuit. A gate driving circuit (not shown) for generating the gate signals may be mounted on a flexible printed circuit (FPC) film (not shown), which may be attached to the substrate 110, directly mounted on the substrate 110, or integrated with the substrate 110. The gate lines 121 may extend to be connected to a driving circuit that may be integrated with the substrate 110.

The storage electrode lines 131 are supplied with a predetermined voltage. Each of the storage electrode lines 1 31 extends substantially in the transverse direction and is disposed between two adjacent gate lines 121, being closer to an upper one of the two gate lines 121. Each storage electrode line 131 includes a plurality of sets of branches 1 33a to 1 33d and a plurality of connections 1 33e connecting the branches 1 33a to 133d.

A set of branches 1 33a to 1 33d includes two longitudinal branches forming first and second storage electrodes 133a and 133b and spaced apart from each other and two oblique branches forming third and fourth storage electrodes 133c and 133d and connected between the first and second storage electrodes 133a and 133b. In detail, the first storage electrode 133a has a free end portion and a fixed end portion that is connected to the storage electrode line 1 31 and has a projection. The third and fourth storage electrodes 133c and 1 33d extend approximately from a center of the first storage electrode 1 33a and upper and lower ends of the second storage electrode 133b, respectively. However, the storage electrode lines 131 may have various shapes and arrangements.

Each of the connections 133e is connected between a first storage electrode 1 33a of a set of storage electrodes 1 33a to 1 33d and a second storage electrode 1 33b of another set of storage electrodes 133a to 1 33d adjacent thereto.

The gate lines 121 and the storage electrode lines 131 are preferably made of an Al-containing metal such as Al and an Al alloy, a Ag-containing metal such as Ag and a Ag alloy, a Cu-containing metal such as Cu and a Cu alloy, a Mo-containing metal such as Mo and a Mo alloy, Cr, Ti, or Ta. The gate lines 121 and the storage electrode lines 131 may have a multi-layered structure including two films having different physical characteristics.

In addition, the lateral sides of the gate lines 121 and the storage electrode lines 131 are inclined relative to a surface of the substrate, and the inclination angle thereof ranges from about 30 to 80 degrees.

A gate insulating layer 140 preferably made of silicon nitride (SiNx) or silicon oxide (SiOx) is formed on the gate lines 121 and the storage electrode lines 131.

A plurality of semiconductor stripes 151 preferably made of hydrogenated amorphous silicon (abbreviated to "a-Si") or polysilicon are formed on the gate insulating layer 140. Each semiconductor stripe 151 extends substantially in the longitudinal direction and has a plurality of projections 154 branched out toward the gate electrodes 124. The semiconductor stripes 151 become wide near the gate lines 121 and the storage electrode lines 131 such that the semiconductor stripes 151 cover large areas of the gate lines 121 and the storage electrode lines 131.

A plurality of ohmic contact stripes and islands 161 and 165 preferably made of silicide or n+ hydrogenated a-Si heavily doped with an n-type impurity such as phosphorous are formed on the semiconductor stripes 151. Each ohmic contact stripe 161 has a plurality of projections 163, and the projections 163 and the ohmic contact islands 165 are located in pairs on the projections 1 54 of the semiconductor stripes 151.

The lateral sides of the semiconductor stripes 1 51 and the ohmic contacts 161 and 165 are inclined relative to a surface of the substrate, and the inclination angles thereof are preferably in a range between about 30 to 80 degrees.

A plurality of data lines 171, a plurality of drain electrodes 175 separated from the data lines 171, and a plurality of isolated metal pieces 178 are formed on the ohmic contacts 161 and 165 and the gate insulating layer 140.

The data lines 171 for transmitting data voltages extend substantially in the longitudinal direction and cross the gate lines 121 at right angles. The data lines 171 also intersect the storage electrode lines 131 and the connections 133e such that each data line 171 is disposed between the first and second storage electrodes 133a and 133b in adjacent sets of the branches 1 33a to 1 33d of the storage electrode lines 131. Each data line 1 71 includes an end portion 179 having a large area for contact with another layer or an external device. A data driving circuit (not shown) for generating the data signals may be mounted on an FPC film (not shown), which may be attached to the substrate 110, directly mounted on the substrate 110, or integrated with the substrate 110. The data lines 1 71 may extend to be connected to a driving circuit that may be integrated with the substrate 110. Each data line 171 includes a plurality of source electrodes 1 73 projecting toward the drain electrodes 1 75.

Each drain electrode 175 includes an end portion having a large area for contact with another layer and another end portion disposed on a gate electrode 124 and partly enclosed by a source electrode 173.

A gate electrode 124, a source electrode 173, and a drain electrode 1 75 along with a projection 154 of a semiconductor stripe 151 form a TFT having a channel formed in the projection 154 disposed between the source electrode 1 73 and the drain electrode 1 75.

The metal pieces 1 78 are disposed on the gate lines 121 near the end portions of the storage electrodes 133a.

The data lines 171, the drain electrodes 175, and the metal pieces 1 78 are preferably made of a refractory metal such as Cr, Mo, Ti, Ta, or alloys thereof. However, they may also have a multi-layered structure including a low-resistivity film (not shown) and a refractory metal film (not shown).

Like the gate lines 121 and the storage electrode lines 131, the data lines 1 71 and the drain electrodes 175 have tapered lateral sides, and the inclination angles thereof range from about 30 to 80 degrees.

The ohmic contacts 161 and 165 are interposed only between the underlying semiconductor stripes 1 51 and the overlying data lines 171 and the overlying drain electrodes 175 thereon, and reduce the contact resistance therebetween. The semiconductor stripes 1 51 include a plurality of exposed portions that are not covered with the data lines 171 and the drain electrodes 175, such as portions located between the source electrodes 173 and the drain electrodes 175. Although the semiconductor stripes 151 are narrower than the data lines 171 at most places, the width of the semiconductor stripes 1 51 becomes large near the gate lines 121 and the storage electrode lines 1 31 as described above, to smooth the profile of the surface, thereby preventing the disconnection of the data lines 171. The semiconductor stripes 151 include some exposed portions that are not covered with the data conductors 171 and 175, such as portions located between the source electrodes 173 and the drain electrodes 1 75.

A passivation layer 180 is formed on the data lines 171, the drain electrodes 175, the metal pieces 178, and the exposed portions of the semiconductor stripes 1 51. The passivation layer 180 is preferably made of an organic material having a good flatness characteristic. The passivation layer 180 may include a lower film of an inorganic insulator and an upper film of an organic insulator such that it has the excellent insulating characteristics of the organic insulator while preventing the exposed portions of the semiconductor stripes 151 from being damaged by the organic insulator.

A plurality of pixel electrodes 191, a plurality of contact assistants 81 and 82, and a plurality of overpasses 83, which are preferably made of a transparent conductor such as ITO or IZO or a reflective conductor such as Ag or Al, are formed on the passivation layer 180.

The pixel electrodes 191 are physically and electrically connected to the drain electrodes 175 through the contact holes 185 such that the pixel electrodes 191 receive the data voltages from the drain electrodes 175.

The pixel electrodes 191 supplied with the data voltages generate electric fields in cooperation with the common electrode 270, which determine the orientations of liquid crystal molecules in the liquid crystal layer 3.

A pixel electrode 191 and the common electrode 270 of the common electrode panel 200 form a liquid crystal capacitor, which stores applied voltages after turn-off of the TFT. An additional capacitor called a "storage capacitor," which is connected in parallel to the liquid crystal capacitor, is provided for enhancing the voltage storing capacity. The storage capacitors are implemented by overlapping the pixel electrodes 191 with the storage electrode lines 131 including the storage electrodes 133a to 1 33d.

Each pixel electrode 191 is chamfered at its left corners and the chamfered edges of the pixel electrode 191 make an angle of about 45 degrees with the gate lines 1 21.

Each pixel electrode 191 has a lower cutout 92a, a center cutout 91, and an upper cutout 92b, which partition the pixel electrode 191 into a plurality of partitions. The cutouts 91 to 92b substantially have inversion symmetry with respect to an imaginary transverse line bisecting the pixel electrode 191.

The lower and upper cutouts 92a and 92b obliquely extend respectively from a right edge of the pixel electrode 191 near a lower and an upper right corner approximately to a center of a left edge of the pixel electrode 191 and overlap the third and fourth storage electrodes 133c and 133d. The lower and upper cutouts 92a and 92b are disposed at lower and upper halves of the pixel electrode 191, respectively, which can be divided by the imaginary transverse line. The lower and upper cutouts 92a and 92b make an angle of about 45 degrees to the gate lines 121, and they extend substantially perpendicular to each other.

The center cutout 91 extends along the imaginary transverse line and has an inlet from the right edge of the pixel electrode 191, which has a pair of inclined edges substantially parallel to the lower cutout 92a and the upper cutout 92b, respectively.

Accordingly, the lower half of the pixel electrode 191 is partitioned into two lower partitions by the lower cutout 92a and the upper half of the pixel electrode 191 is also partitioned into two upper partitions by the upper cutout 92b. The number of partitions or the number of cutouts is varied depending on the design factors such as the size of pixels, the ratio of the transverse edges and the longitudinal edges of the pixel electrodes, the type and characteristics of the liquid crystal layer 3, and so on.

The overpasses 83 cross over the gate lines 121 and are connected to the exposed projection of the fixed end portions of the first storage electrodes 1 33a and the exposed portions of the storage electrode lines 131 through the contact holes 1 83b and 183a, respectively, which are disposed opposite each other with respect to the gate lines 121. The overpasses 83 overlap the metal pieces 1 78 and they may be electrically connected to the metal pieces 178. The storage electrode lines 131 including the storage electrodes 1 33a to 1 33d along with the overpasses 83 and the metal pieces 1 78 may be used for repairing defects in the gate lines 121 , the data lines 171, or the TFTS.

The contact assistants 81 and 82 are connected to the end portions 129 of the gate lines 121 and the end portions 179 of the data lines 171 through the contact holes 181 and 182, respectively. The contact assistants 81 and 82 protect the end portions 129 and 179 and complement the adhesion of the end portions 129 and 179 with external devices.

The description of the common electrode panel 200 follows with reference to Figs. 2 to 5.

A light blocking member 220 called a black matrix for preventing light leakage is formed on an insulating substrate 210 made of a material such as transparent glass. The light blocking member 220 may include a plurality of openings 225 that face the pixel electrodes 191 and may have substantially the same planar shape as the pixel electrodes 191. Otherwise, the light blocking member 220 may include linear portions corresponding to the data lines 171 and the gate lines 121, and other portions corresponding to the TFTs.

A plurality of color filters 230 are formed on the substrate 210 and they are disposed substantially in the areas enclosed by the light blocking member 220. The color filters 230 may extend substantially in the longitudinal direction along the pixel electrodes 191. The color filters 230 may represent one of the primary colors such as red, green, and blue colors.

An overcoat 250 for preventing the color filters 230 from being exposed and for providing a flat surface is formed on the color filters 230 and the light blocking member 220. The overcoat 250 may be omitted.

A common electrode 270 preferably made of a transparent conductive material such as ITO and IZO is formed on the overcoat 250 and is thicker than the pixel electrode 191.

The common electrode 270 has a plurality of sets of cutouts 71 to 72b.

A set of cutouts 71 to 72b faces a pixel electrode 191, and includes a lower cutout 72a, a center cutout 71, and an upper cutout 72b. Each of the cutouts 71 to 72b is disposed between adjacent cutouts 91 to 92b of the pixel electrode 191 or between a cutout 92a or 92b and a chamfered edge of the pixel electrode 191. In addition, each of the cutouts 71 to 72b has at least an oblique portion extending parallel to the lower cutout 92a or the upper cutout 92b of the pixel electrode 191, and the distances between two adjacent cutouts 71 to 72b and 91 to 92b, the oblique portions thereof, the oblique edges thereof, and the chamfered edges of the pixel electrode 191, which are parallel to each other, are substantially the same. The cutouts 71 to 72b substantially have inversion symmetry with respect to the above-described transverse line bisecting the pixel electrode 191, and are wider than the cutouts 91 to 92b of the pixel electrode 191.

Each of the lower and upper cutouts 72a and 72b includes an oblique portion extending approximately from a left edge of the pixel electrode 191 to approximately a lower or upper edge of the pixel electrode 191, and transverse and longitudinal portions extending from respective ends of the oblique portion along edges of the pixel electrode 191, overlapping the edges of the pixel electrode 191, and making obtuse angles with the oblique portion.

The center cutout 71 includes a central transverse portion extending approximately from the left edge of the pixel electrode 191 along the third storage electrode 1 33c, a pair of oblique portions extending from an end of the central transverse portion approximately to a right edge of the pixel electrode and making obtuse angles with the central transverse portion, and a pair of terminal longitudinal portions extending from the ends of the respective oblique portions along the right edge of the pixel electrode 191, overlapping the right edge of the pixel electrode 191, and making obtuse angles with the respective oblique portions.

The number of the cutouts 71 to 72b may be varied depending on the design factors, and the light blocking member 220 may also overlap the cutouts 71 to 72b to block the light leakage through the cutouts 71 to 72b.

Upon application of the common voltage to the common electrode 270 and a data voltage to the pixel electrodes 191, an electric field substantially perpendicular to the surfaces of the panels 100 and 200 is generated. The LC molecules tend to change their orientations in response to the electric field such that their long axes are perpendicular to the field direction. The common electrode 270 and the pixel electrodes 191 are used as field-generating electrodes.

The cutouts 91 to 92b and 71 to 72b of the electrodes 191 and 270 and the edges of the pixel electrodes 191 distort the electric field to have a horizontal component that is substantially perpendicular to the edges of the cutouts 91 to 92b and 71 to 72b and the edges of the pixel electrodes 191. Accordingly, the LC molecules on each sub-area are tilted in a direction by the horizontal component and the azimuthal distribution of the tilt directions are localized to four directions, thereby increasing the viewing angle of the LCD.

The number and the arrangements of the cutouts 71 to 72b, and 91 to 92b may be varied depending on the design factors.

At least one of the cutouts 91 to 92b and 71 to 72b can be substituted with protrusions (not shown) or depressions (not shown). The protrusions are preferably made of an organic or inorganic material and are disposed on or under the field-generating electrodes 191 and 270.

Alignment layers 11 and 21 that may be homeotropic are coated on inner surfaces of the panels 100 and 200, and polarizers 12 and 22 are provided on outer surfaces of the panels 100 and 200 such that their polarization axes may be crossed and one of the transmissive axes may be parallel to the gate lines 121. One of the polarizers may be omitted when the LCD is a reflective LCD. The structure of the polarizers 12 and 22 will be described in detail later.

The LCD may further include at least one retardation film (not shown) for compensating the retardation of the LC layer 3. The retardation film has birefringence and retards opposite to the LC layer 3.

The LCD may further include a backlight unit (not shown) for supplying light to the LC layer 3 through the polarizers 12 and 22, the retardation film, and the panels 100 and 200.

It is preferable that the LC layer 3 has negative dielectric anisotropy and it is subjected to a vertical alignment such that the LC molecules 300 in the LC layer 3 are aligned with their long axes substantially vertical to the surfaces of the panels 100 and 200 in the absence of an electric field. Accordingly, incident light cannot pass the crossed polarization system of the polarizers 12 and 22.

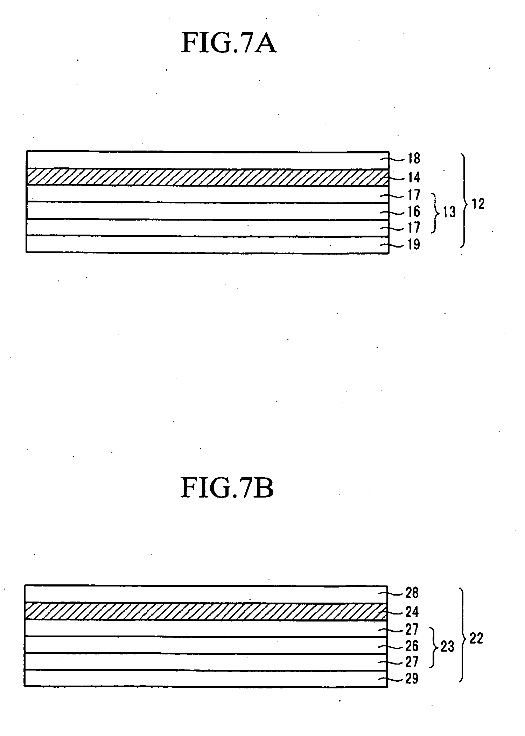

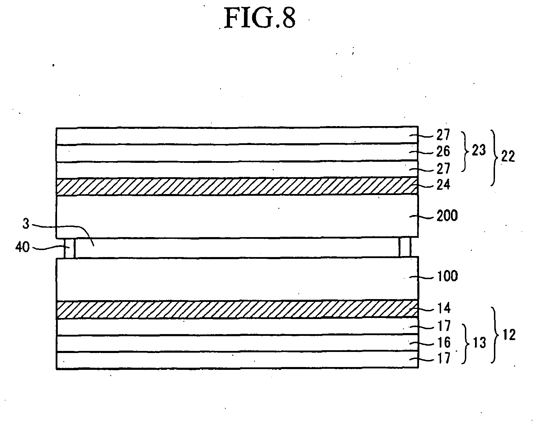

Next, the description of the polarizers 12 and 22, and the LCD on which the polarizers 1 2 and 22 are attached follows with reference to Figs. 7A, 7B and 8.

Figs. 7A and 7B are sectional views of a polarizer according to an embodiment of the present invention, and Fig. 8 is a sectional view of an LCD including the polarizer according to an embodiment of the present invention.

As shown in Fig. 8, the thin film transistor panel 100 and the common electrode panel 200 are separated with a predetermined distance by a space member 40, and the liquid crystal layer 3 is formed therebetween.

A lower polarizer 12 and an upper polarizer 22 are formed on the surfaces outside the two panels 100 and 200

The description of the upper and the lower polarizers 12 and 22 follows with reference to Figs. 7A and 7B.

Fig. 7A is a sectional view of the lower polarizer 12 and Fig. 7B is a sectional view of the upper polarizer 22.

The upper and the lower polarizers 12 and 22 respectively include polarizer bodies 13 and 23, release films 18 and 28 respectively formed on one side of the polarizer bodies 13 and 23, protective films 19 and 29 respectively formed on the other side of the polarizer bodies 13 and 23, and adhesive layers 14 and 24 respectively formed between the polarizer bodies 13 and 23 and the release films 18 and 28.

The polarizer bodies 13 and 23 respectively include polarizing mediums 16 and 26, and supporting layers 17 and 27 respectively formed on or under the polarizing mediums 16 and 26.

The polarizing mediums 16 and 26 may be made of polyvinyl alcohol (PVA), and the supporting layers 17 and 27 may be of triacetate cellulose (TAC), cellulose acetate propionate, and/or wide view-TAC (WV-TAC).

The release films 18 and 28 are respectively formed on the adhesive layers 14 and 24, and removed from the polarizers 12 and 22 when attaching the polarizers 12 and 22 to the panels 100 and 200. Accordingly, as shown in Fig. 8, the polarizers 12 and 22, which are attached to the LCD, do not include the release films 18 and 28.

The protective films 19 and 29 are respectively formed outside the polarizer bodies 13 and 23, and protect the polarizers 12 and 22 in the manufacturing process of the LCD. The protective films 19 and 29 are removed from the polarizers 12 and 22 after the completion of the LCD. Accordingly, as shown in Fig. 8, the polarizers 12 and 22, which are attached to the LCD, do not include the protective films 19 and 29.

At above, the protective films 19 and 29 and the release films 18 and 28 are removed from the polarizers 12 and 22 in the predetermined steps. However, the static electricity may be generated due to the charge separation that occurs when the release films 18 and 28 or the protective films 19 and 29 are removed from the polarizers 12 and 22.

In this embodiment according to the present invent, the polarizers 12 and 22 include the adhesive layers 14 and 24 including a water soluble conductive polymer, accordingly the static electricity may be effectively removed in the manufacturing process.

The adhesive layers 14 and 24 include an adhesive property material and a water soluble conductive polymer to adhere the polarizer bodies 1 3 and 23 to the panels 100 and 200.

The adhesive property material may include a material such as polyvinylacetate, cyanoacrylate and bisacrylate, but there is no restriction to a specified material for the adhesive property material as long as the material has adhesive property.

The water soluble conductive polymer may be a self-doped water soluble polyaniline graft copolymer represented by Chemical Formula (I):

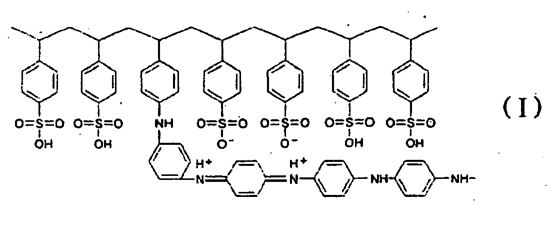

or, a self-doped water soluble polypyrrole graft copolymer represented by Chemical Formula (II):

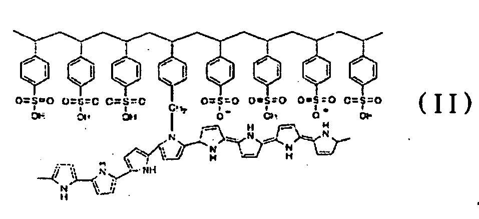

It is preferable that the content of the water soluble conductive polymer is in the range of about 5 to 50 weight percentage in the total content of the adhesive.

The polyaniline graft copolymer may be formed by grafting an aniline monomer to the main chain of polystyrene sulfonate, and the polypyrrole graft copolymer may be formed by grafting a pyrrol monomer to the main chain of polystyrene sulfonate.

Because the main chain has the function of a dopant, it is not necessary that the copolymers include an additional dopant to improve the solubility, and because the copolymer may be easily melted into the organic solvent as well as an aqueous solution, the copolymer may be easily mixed with the adhesive property material and a solvent.

Accordingly, the phase separation between the polyaniline or the polypyrrole, and the dopant may be prevented. The phase separation may be generated when adding the additional dopant to the polyaniline or the polypyrrole to easily melt the polyaniline or the polypyrrole into the adhesive property material and a solvent

In this embodiment according to the present invention, the self-doped water soluble polyaniline graft copolymer or the self-doped water soluble polypyrrole graft copolymer is mixed with the adhesive property material when forming the adhesive layers 14 and 24, such that the static electricity due to exfoliation electrification may be effectively removed without an additional blocking static electricity layer.

Accordingly, static electricity spot and damage of the LCDs may be prevented in the embodiment according to the present invention.

## Claims

1. A liquid crystal display, comprising:
first and second substrates (110; 210);
a liquid crystal layer (3) formed between the first and second substrates (110; 210);
a polarizer (12; 22) provided on at least one of the first and second substrates (110; 210), and
an adhesive layer (14; 24) adhering the polarizer (12; 22) to the one of the first and second substrates (110; 210),
**characterized in that**
the adhesive layer (14; 24) comprises a water soluble conductive polymer and an adhesive property material.

2. The liquid crystal display of claim 1, wherein the water soluble conductive polymer includes a self-doped water soluble polyaniline graft copolymer.

3. The liquid crystal display of claim 2, wherein the self-doped water soluble polyaniline graft copolymer is represented by Chemical Formula (I):

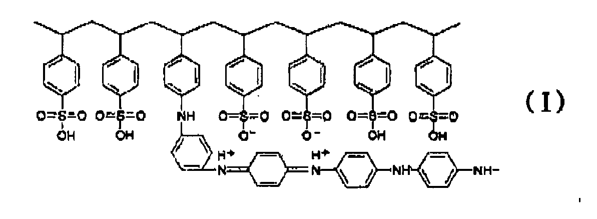

4. The liquid crystal display of claim 1, wherein the water soluble conductive polymer includes a self-doped water soluble polypyrrole graft copolymer.

5. The liquid crystal display of claim 4, wherein the self-doped water soluble polypyrrole graft copolymer is represented by Chemical Formula (II):

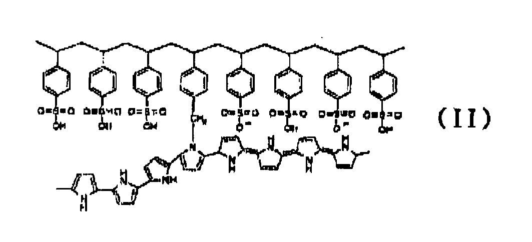

6. The liquid crystal display of claim 1, wherein the content of the water soluble conductive polymer is in the range of about 5 to 50 weight percentage in the total content of the adhesive (14; 24).

7. The liquid crystal display of claim 1, further comprising:
a gate line (121) and a data line (171) formed on the first substrate (110) and crossing each other;
a thin film transistor connected to the gate line (121) and the data line (171; and
a pixel electrode (191) connected to the thin film transistor.

8. The liquid crystal display of claim 1, further comprising a slope member for determining the slope direction of the liquid crystal molecules (300) of the liquid crystal layer (3).

## Patentansprüche

1. Flüssigkristallanzeige, umfassend:
ein erstes und ein zweites Substrat (110; 210);
eine Flüssigkristallschicht (3), die zwischen dem ersten und zweiten Substrat (110; 210) gebildet ist;
einen Polarisator (12; 22), der an mindestens einem von dem ersten und zweiten Substrat (110; 210) gebildet Ist, und
eine Klebeschicht (14; 24), die den Polarisator (12; 22) mit einem von dem ersten und zweiten Substrat (110; 210) verbindet,
**dadurch gekennzeichnet, dass**
die Klebeschicht (14; 24) ein wasserlösliches leitendes Polymer und ein Material mit klebenden Eigenschaften umfasst.

2. Flüssigkristallanzeige nach Anspruch 1, wobei das wasserlösliche leitende Polymer ein selbstdotiertes wasserlösliches Polyanilin-Pfropfpolymer umfasst.

3. Flüssigkristallanzeige nach Anspruch 2, wobei das selbstdotierte wasserlösliche Polyanilin-Pfropfpolymer durch die chemische Formel (I) repräsentiert wird:

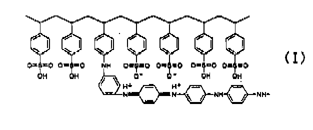

4. Flüssigkristallanzeige nach Anspruch 1, wobei das wasserlösliche leitende Polymer ein selbstdotiertes wasserlösliches Polypyrrol-Pfropfpolymer umfasst.

5. Flüssigkristallanzeige nach Anspruch 4, wobei das selbstdotierte wasserlösliche Polypyrrol-Pfropfpolymer durch die chemische Formel (II) repräsentiert wird:

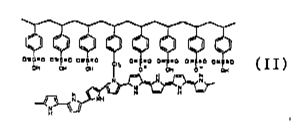

6. Flüssigkristallanzeige nach Anspruch 1, wobei sich der Gehalt an wasserlöslichem leitenden Polymer im Bereich von etwa 5 bis 50 Gewichtsprozent bezogen auf den Gesamtgehalt an Klebemittel (14; 24) bewegt.

7. Flüssigkristallanzeige nach Anspruch 1, darüber hinaus umfassend:
eine Gate-Linie (121) und eine Daten-Linie (171), die auf dem ersten Substrat (110) gebildet sind und einander kreuzen;
einen Dünnschichttransistor, der mit der Gate-Linie (121) und der Daten-Linie (171) verbunden ist; und
eine Pixel-Elektrode (191), die mit dem Dünnschichttransistor verbunden ist.

8. Flüssigkristallanzeige nach Anspruch 1, darüber hinaus umfassend ein Neigungselement zum Bestimmen der Neigungsrichtung der Flüssigkristallmoleküle (300) der Flüssigkristallschicht (3).

## Revendications

1. Un écran à cristaux liquides comprenant :
un premier et un deuxième substrat (110 ; 210) ;
une couche à cristaux liquides (3) formée entre le premier et le deuxième substrat (110 ; 210) ;
un polariseur (12 ; 22) fourni sur au moins un du premier ou du deuxième substrat (110 ; 210), et
une couche adhésive (14 ; 24) collant le polariseur (12 ; 22) à un du premier ou du deuxième substrat (110 ; 210),
**caractérisé en ce que**
la couche adhésive (14 ; 24) comprend un polymère conducteur soluble dans l'eau et un matériau aux propriétés adhésives.

2. L'écran à cristaux liquides de la revendication 1, où le polymère conducteur soluble dans l'eau inclut un copolymère de polyaniline greffé et auto-dopé soluble dans l'eau.

3. L'écran à cristaux liquides de la revendication 2, où le copolymère de polyaniline greffé et auto-dopé soluble dans l'eau est représenté par la formule chimique (I) :

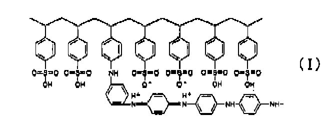

4. L'écran à cristaux liquides de la revendication 1, où le polymère conducteur soluble dans l'eau inclut un copolymère de polypyrrole greffé et auto-dopé soluble dans l'eau.

5. L'écran à cristaux liquides de la revendication 4, où le copolymère de polypyrrole greffé et auto-dopé soluble dans l'eau est représenté par la formule chimique (II) :

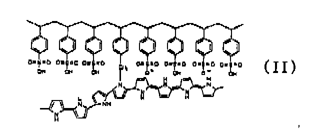

6. L'écran à cristaux liquides de la revendication 1, où le contenu du polymère conducteur soluble dans l'eau est dans la fourchette de pourcentage massique d'environ 5 à 50 dans le contenu total de l'adhésif (14 ; 24).

7. L'écran à cristaux liquides de la revendication 1, comprenant également ;
une ligne de porte (121) et une ligne de données (171) formées sur le premier substrat (110) et se croisant ;
un transistor à film fin connecté à la ligne de porte (121) et à la ligne de données (171) ; et
une électrode à pixel (191) connectée au transistor à film fin.

8. L'écran à cristaux liquides de la revendication 1, comprenant également un élément en pente pour déterminer le sens de la pente des molécules de cristaux liquides (300) de la couche à cristaux liquides (3),
